# EUROPEAN PATENT SPECIFICATION

(11) **EP 2 121 811 B1**
(45) Date of publication and mention of the grant of the patent: **18.06.2014**
(21) Application number: 07865352.4
(22) Date of filing: 07.12.2007
(51) Int. Cl.: C08J 3/02, C08K 7/16, C08K 3/00, C09D 7/12, C08K 3/32, C08K 3/34, C08K 3/36, C08K 9/04

(54) **METHOD FOR MAKING A DISPERSION**
VERFAHREN ZUR HERSTELLUNG EINER DISPERSION
PROCÉDÉ DE FABRICATION D'UNE DISPERSION

(30) Priority: 22.12.2006 US 615552
(43) Date of publication of application: 25.11.2009
(73) Proprietor: 3M Innovative Properties Company, Saint Paul, MN 55133-3427 (US)
(72) Inventor: BARAN, Jimmie R., Saint Paul, MN 55133-3427 (US); SHINBACH, Madeline P., Saint Paul, Minnesota 55133-3427 (US); MALLOZZI, Meghan L., Saint Paul, Minnesota 55133-3427 (US)
(74) Representative: Vossius & Partner
(86) International application number: PCT/US2007/086720
(87) International publication number: WO 2008/079631

(56) References cited:
- EP-A1- 1 925 427
- WO-A1-2006/008120
- WO-A2-2008/054874
- WO-A2-2008/127273
- KR-A- 20050 056 892
- KR-A- 20050 091 841
- KR-B1- 100 628 356
- US-A- 5 827 337

## Description

### Field

The present invention discloses a method for increased material throughput of a dispersion.

### Background

Achieving a uniform blend of particles in a resin is a problem faced daily by engineers and operators in industries as varied as pharmaceuticals, foods, plastics, and battery production. Even when an acceptable blend is obtained, additional challenges arise in maintaining the blend through downstream equipment. Poor blending or the inability to maintain an adequate blend before and during processing typically lead to additional and unnecessary costs (for example, costs associated with rejected material and decreased yields, added blending time and energy, decreased productivities, start-up delays and defective or out-of-specification products).

Blends generally require sufficient dispersion of components to achieve uniform properties and meet performance requirements relative to blends having regions with disproportionate or discontinuous levels of materials. Small and large quantities of materials may be difficult to disperse in a composition relative to the processing conditions and properties of the components of the blend or mixture. Dispersibility or flowability of materials and/or caking of powders may contribute to an inability to achieve uniform blends and mixtures, and decrease batch uniformity which, among other drawbacks, can require increased testing and sampling.

Some undemanding industrial applications can tolerate a level of agglomeration not tolerated in more demanding applications. Applications involving precise metering or mixing of a powder, however, typically require less agglomeration. Even in relatively undemanding applications, the ability to improve powder flow can provide an increase in homogeneity with milder mixing conditions or with reduced mixing periods. Additionally, increased powder flow can allow for utilization of lower levels of expensive ingredients (for example, dyes and pigments), particularly where the requirement of using a level of such ingredients correlates with the dispersibility of the materials in the powder with which they are mixed.

US-B-5,827,337 describes an uncured, molded abrasive article comprising: a) a granular abrasive material uniformly coated with at least one phenol-novolac resin; b) an effective amount of at least one curing agent; and c) an amount of water effective to bind the abrasive article prior to curing; wherein the abrasive article comprises less than 0.5%, by weight, volatile organic chemicals.

WO-A-2008/127273 describes a process for uniformly depositing nanomaterials having particles smaller than 1 µm (i.e., nanoparticles) onto a surface of a base material (substrate or surface).

EP 1 925 427 A1 discloses a method for manufacturing a light-absorbent resin molding that is formed by a process in which a light-absorbent resin composition for laser welding that includes laser-light-absorbent nanoparticles and a polymer dispersing agent having a glass transition temperature of 30°C or higher is diluted by a thermoplastic resin and the polymer dispersing agent included in the light-absorbent resin composition for laser welding, and kneaded; said method for manufacturing a light-absorbent resin molding comprising using the polymer dispersing agent and the thermoplastic resin to dilute the light-absorbent resin composition for laser welding in which the laser-light-absorbent nanoparticles are at least one of nanoparticles of tungsten oxide indicated by the general formula W_{y}O_{z} (wherein W is tungsten, O is oxygen, and 2.0 z/y < 3.0) and nanoparticles of composite tungsten oxide indicated by the general formula MₓW_{y}O_{z} (M is an element selected from a list; W is tungsten; O is oxygen; 0.001 x/y 1; and 2.0 < z/y 3.0); and performing kneading and molding to manufacture the light-absorbent resin molding.

### Summary

The present invention relates to a method for making a dispersion which comprises mixing microparticles, nanoparticles and a fluid polymer component, according to claim 1. The nanoparticles are present in an amount sufficient to increase material throughput relative to a comparable dispersion that is free of nanoparticles.

In one embodiment, the nanoparticles are present in the dispersion in an amount sufficient to decrease mixing time relative to a comparable dispersion that is free of nanoparticles.

Herein described is also a dispersion comprising microparticles, nanoparticles, and a fluid polymer component, where the nanoparticles are present in an amount sufficient to increase material throughput relative to a comparable dispersion that is free of nanoparticles.

In one aspect, surface modified nanoparticles of a dispersion are present in an amount sufficient to increase the material throughput of the dispersion.

In one aspect, the nanoparticles are dispersed within the microparticles, and mixed with a fluid polymer component to form a dispersion.

Herein described is also a coating composition comprising the dispersion of this disclosure, where the composition is curable.

Particles (for example, fillers and extenders) and/or small molecules may present problems in coatings and in various resin compositions. The particles or small molecules may migrate to the surface of a composition, or may be poorly dispersed when mixed with a resin(s) and other components to yield regions of disproportionate or discontinuous concentrations resulting in negative and/or undesirable properties. During the mixing of fluids or liquids with particles, inconsistencies in mixing viscosities, torque, and material throughput may be encountered as a result of immiscible compositions and/or poor dispersions of particles.

Microparticles and nanoparticles are mixed in a fluid polymer component to form a dispersion having increased material throughput and decreased mixing time. A coating comprising the dispersion with a sufficient amount of nanoparticles has increased material throughput and decreased mixing time relative to a comparable coating comprising a dispersion that is free of nanoparticles.

### Detailed Description

For the following defined terms, these definitions shall be applied, unless a different definition is given in the claims or elsewhere in the specification.

The term "material throughput" refers to the amount of a dispersion produced by a mixing process that mixes microparticles, nanoparticles and a fluid polymer component over a set period of time (recorded in grams/minute) to make a dispersion. The output of the inventive process is compared to that of a similar process without nanoparticles, but essentially the same in all other respects, such as type of apparatus used and process conditions (for example, temperature). In one example, the dispersion can be melt-mixed using a twelve-inch co-rotating twin screw extruder (B&P Processing Systems, model #MP-2019; 15:1 with 17 - 90° kneading blocks, and 2 - 60° forward kneading blocks) at a feed rate set point of 1.5. The material exits the extruder at a temperature of approximately 105 °C to 115 °C, where the material is recovered at the extruder die and weighed as a function of time. The examples in this description provide other processes for comparison of material throughput.

The term "mixing time" refers to the time required to mix nanoparticles, microparticles, and a fluid polymer component to make a dispersion.

The term "torque" means the measure of the force applied to a member, such as an extruder screw or mixing impeller, to produce rotational motion. Torque is determined by multiplying the applied force by the distance from the pivot point to the point where the force is applied.

The term "amount sufficient" refers to a quantity of nanoparticles that are present in the dispersion to affect material properties relative to a comparable dispersion that is free of nanoparticles. For example, the property may be increased or decreased as a function of the quantity or amount of a material. For example, the nanoparticles mixed in the dispersion provide an increase in material throughput, and/or a decrease in mixing time.

The term "comparable dispersion" refers to a dispersion of nanoparticles which, by comparison to a dispersion of this invention is the same, except for the absence of nanoparticles. A comparable dispersion comprises microparticles and a fluid medium, where the concentration of microparticles remains constant with respect to the fluid polymer component.

The term "fluid polymer component" refers to a liquid fluid for dispersing particles, for example, microparticles and nanoparticles. The fluid has a viscosity appropriate to effectively disperse the particles described above. One of skill in the art would be able to determine the appropriate viscosity of the fluid used for a dispersion. The particles are independently dispersed with mixing in the fluid, or the microparticles and nanoparticles are mixed together prior to dispersing in the fluid.

The term "nanoparticle" as used herein (unless an individual context specifically implies otherwise) will generally refer to particles, groups of particles, particulate molecules such as small individual groups or loosely associated groups of molecules, and groups of particulate molecules that while potentially varied in specific geometric shape have an effective, or median, diameter that can be measured on a nanoscale (less than 100 nanometers), and more preferably having an effective, or median, diameter or particle size less than 50 nm.

A method for making a dispersion comprises mixing microparticles, nanoparticles and a fluid polymer component. The nanoparticles are added to increase the material throughput and decrease the mixing time required for making a dispersion relative to a comparable dispersion that is free of nanoparticles. Typically, the nanoparticles reduce the amount of agglomeration and flocculation present in the microparticles.

Microparticles generally include organic and/or inorganic microparticles. In some embodiments, the microparticles may comprise both organic and inorganic - material (for example, particles having inorganic cores with an outer layer of organic material thereon). The microparticles have a median particle size or diameter greater than 0.5 micrometer. The microparticles may be further distinguished from the nanoparticles of this disclosure by relative size or median particle size or diameter, shape, and/or functionalization within or on the surface, wherein the microparticles are typically larger than the nanoparticles.

Example of some inorganic and organic microparticles include polymers, lactose, medicaments, fillers, excipients (for example, microcrystalline cellulose (and other natural or synthetic polymers)), lactose monohydrate and other sugars, exfolients, cosmetic ingredients, aerogels, foodstuffs, toner materials, pigments and combinations thereof.

Further examples of organic microparticles include polymers such as poly(vinyl chloride), polyester, poly(ethylene terephthalate), polypropylene, polyethylene, poly vinyl alcohol, epoxies, polyurethanes, polyacrylates, polymethacrylates, and polystyrene. Polymeric microparticles can be made using techniques known in the art and/or are commercially available. For example, "Epon 2004" and "Epon 1001F" are available from Hexion Specialty Chemicals, Columbus, OH.

Examples of inorganic microparticles include abrasives, metals, ceramics (including beads, bubbles, microspheres and aerogels), fillers (for example, carbon black, titanium dioxide, calcium carbonate, dicalcium phosphate, nepheline (available under the tradename designation, "MINEX" (Unimin Corporation, New Canaan, CT), feldspar and wollastonite), excipients, exfolients, cosmetic ingredients, silicates (for example, talc, clay, and sericite), aluminates and combinations thereof.

Exemplary ceramic microparticles can be made using techniques known in the art and/or are commercially available. Ceramic bubbles and ceramic microspheres are described, for example, in U.S. Pat. Nos. 4,767,726 (Marshall) and 5,883,029 (Castle). Examples of commercially available glass bubbles include those marketed by 3M Company, St. Paul, MN, under the designation "3M SCOTCHLITE GLASS BUBBLES" (for example, grades K1, K15, S15, S22, K20, K25, S32, K37, S38, K46, S60/10000, S60HS, A16/500, A20/1000, A20/1000, A20/1000, A20/1000, H50/10000 EPX, and H50/10000 (acid washed)); glass bubbles marketed by Potter Industries, Valley Forge, PA, under the trade designation "SPHERICEL" (for example, grades 110P8 and 60P18), "LUXSIL", and "Q-CEL" (for example, grades 30, 6014, 6019, 6028, 6036, 6042, 6048, 5019, 5023, and 5028); hollow glass microspheres marketed under the trade designation "DICAPERL" by Grefco Minerals, Bala Cynwyd, PA, (for example, grades HP-820, HP-720, HP-520, HP-220, HP-120, HP-900, HP-920, CS-10-400, CS-10-200, CS-10-125, CSM-10-300, and CSM-10-150); and hollow glass particles marketed by Silbrico Corp., Hodgkins, IL, under the trade designation "SIL-CELL" (for example, grades SIL 35/34, SIL-32, SIL-42, and SIL-43). Commercially available ceramic microspheres include ceramic hollow microspheres marketed by SphereOne, Inc., Silver Plume, CO, under the trade designation, "EXTENDOSPHERES" (for example, grades SG, CG, TG, SF-10, SF-12, SF-14, SLG, SL-90, SL-150, and XOL-200); and ceramic microspheres marketed by 3M Company under the trade designation "3M CERAMIC MICROSPHERES" (for example, grades G-200, G-400, G-600, G-800, G-850, W-210, W-410, and W-610).

Commonly used fillers include aggregated forms of silica, such as fumed or precipitated silica. Such aggregated silicas consist of small diameter particles firmly aggregated with one another into an irregular network. These aggregates require high shear to be broken, and even when subjected to high shear forces, the aggregate is typically not broken down into individual particles. Similarly, surface treated silica, after being exposed to high shear forces, yields new untreated particle surfaces which may affect the particle solubility/dispersibility into a fluid polymer component.

In one embodiment, the microparticles are at least one of silicates, ceramic beads, ceramic bubbles, or ceramic microspheres.

The microparticles have median particle size diameters greater than 0.5 micrometer and more desirably greater than 5 micrometers. In some instances, the microparticles may have median particle size diameters greater than 25 micrometers with some median particle size diameters greater than 100 micrometers, but larger than the surface modified nanoparticles. In one embodiment, the microparticles may have median particle size diameters ranging from 0.5 micrometer to 200 micrometers, preferably ranging from 1 micrometer to 100 micrometers, and more preferably ranging from 5 micrometers to 50 micrometers, based on the median particle size diameter, but not limited to the microparticles in the ranges specified. Some of the microparticles may have a distribution of microparticle sizes, wherein a majority of the microparticles may fall within the ranges specified. Some of the microparticles may have median particle size diameters outside of the microparticle distribution.

In some embodiments, the microparticles are the same (for example, in terms of size, shape, composition, microstructure, surface characteristics, etc.); while in other embodiments they are different. In some embodiments, the microparticles may have a modal (for example, bi-modal or tri-modal) distribution. In another aspect, more than one type of microparticle(s) may be used. A combination of organic and/or inorganic microparticles may be used. It will be understood that the microparticles may be used alone or in combination with one or more other microparticles including mixtures and combinations of organic and inorganic microparticles with nanoparticles and a fluid polymer component in a dispersion.

The nanoparticles described in this disclosure may be nonsurface modified nanoparticles, surface modified nanoparticles or mixtures and combinations of each. Surface modified nanoparticles are physically or chemically modified that is different from the composition of the bulk of the nanoparticles. The surface groups of the nanoparticle preferably are present in an amount sufficient to form a monolayer, preferably a continuous monolayer, on the surface of the particle. The surface groups are present on the surface of the nanoparticles in an amount sufficient to provide nanoparticles that are capable of being subsequently mixed with microparticles and a fluid polymer component with minimal aggregation or agglomeration.

The nanoparticles are present in the dispersion in an amount sufficient to increase material throughput and decrease mixing time of the dispersion.

Suitable inorganic nanoparticles include calcium phosphate, calcium hydroxyapatite, and metal oxide nanoparticles such as zirconia, titania, silica, ceria, alumina, iron oxide, vanadia, zinc oxide, antimony oxide, tin oxide, nickel oxide, and combinations thereof. Suitable inorganic composite nanoparticles include alumina/silica, iron oxide/titania, titania/zinc oxide, zirconia/silica, and combinations thereof. Metals such as gold, silver, or other precious metals can also be utilized as solid particles or as coatings on organic or inorganic nanoparticles.

In one embodiment, the nanoparticles are one of at least silica, alumina, or titania.

Surface modified nanoparticles or precursors to them may be in the form of a colloidal dispersion. Some of these dispersions are commercially available as unmodified silica starting materials, for example, those nano-sized colloidal silicas available under the product designations "NALCO 1040," "NALCO 1050," "NALCO 1060," "NALCO 2326," "NALCO 2327," and "NALCO 2329" colloidal silica from Nalco Chemical Co. of Naperville, IL. Metal oxide colloidal dispersions include colloidal zirconium oxide, suitable examples of which are described, for example, in U.S. Pat. No. 5,037,579 (Matchett), and colloidal titanium oxide, examples of which are described, for example, in U.S. Pat. Nos. 6,329,058 and 6,432,526 (Arney et al.). Such nanoparticles are suitable substrates for surface modification as described below.

Suitable organic nanoparticles include organic polymeric nanospheres, trehalose (a disaccharide of glucose), insoluble sugars such as lactose, glucose or sucrose, and insoluble amino acids. In another embodiment, another class of organic polymeric nanospheres includes nanospheres that comprise polystyrene, such as those available from Bangs Laboratories, Inc. (Fishers, IN) as powders or dispersions. Such organic polymeric nanospheres will generally have median particle sizes ranging from 20 nanometers to not more than 60 nanometers.

Another class of organic nanoparticles includes buckminsterfullerenes (fullerenes), dendrimers, branched and hyperbranched "star" polymers such as 4, 6, or 8 armed polyethylene oxide (available from Aldrich Chemical Company of Milwaukee, WI, or Shearwater Corporation of Huntsville, AL) whose surface has been chemically modified. Specific examples of fullerenes include C₆₀, C₇₀, C₈₂, and C₈₄. Specific examples of dendrimers include polyamidoamine (PAMAM) dendrimers of Generations 2 through 10 (G2 -G10), also available from Aldrich Chemical Company of Milwaukee, WI.

It will be understood that the selected surface modified nanoparticles may be used alone or in combination with one or more other nanoparticles including mixtures and combinations of organic and inorganic nanoparticles. Such combinations may be uniform or have distinct phases, which can be dispersed or regionally specific, such as layered or of a core-shell type structure. The selected nanoparticles, whether inorganic or organic, and in whatever form employed, have a median particle diameter of less than 100 nanometers. In some embodiments, nanoparticles may be utilized having a smaller median effective particle diameter of, for example less than or equal to 50, 40, 30, 20, 15, 10 or 5 nanometers; in some embodiments from 2 nanometers to 20 nanometers; in still other embodiments from 3 nanometers to 10 nanometers. If the chosen nanoparticle or combinations of nanoparticles are themselves aggregated, the maximum preferred cross-sectional dimension of the aggregated nanoparticles will be within any of these stated ranges.

In many cases it may be desirable for the nanoparticles utilized to be substantially spherical in shape. In other applications, however, more elongated shapes by be desired. Aspect ratios less than or equal to 10 are considered preferred, with aspect ratios less than or equal to 3 generally more preferred.

Surface modified or unmodified nanoparticles may be selected such that the nanoparticles are essentially free from a degree of particle association, agglomeration, or aggregation that may interfere with the desired properties when mixed with a microparticles and a fluid polymer component of a dispersion. As used herein, particle "association" is defined as a reversible chemical combination due to any of the weaker classes of chemical bonding forces. Examples of particle association include hydrogen bonding, electrostatic attraction, London forces, van der Waals forces, and hydrophobic interactions. As used herein, the term "agglomeration" is defined as a combination of molecules or colloidal particles into clusters. Agglomeration may occur due to the neutralization of the electric charges, and is typically reversible. As used herein, the term "aggregation" is defined as the tendency of large molecules or colloidal particles to combine in clusters or clumps and precipitate or separate from the dissolved state. Aggregated nanoparticles are firmly associated with one another, and require high shear to be broken. Agglomerated and associated particles can generally be easily separated.

In one embodiment, surface-modified nanoparticles comprise a nanoparticle(s) with a modified surface. The nanoparticles may be inorganic or organic and are selected such that, as described in more detail herein, it is compatible with the microparticles with which it is mixed in a fluid polymer component and is suitable for the application for which it is intended. Generally, the selection of the nanoparticles will be governed at least in part by the specific performance requirements for the dispersion and any more general requirements for the intended application. For example, the performance requirements for the solid or liquid dispersion might require that a nanoparticle have certain dimensional characteristics (size and shape), compatibility with the surface modifying materials along with certain stability requirements (insolubility in a processing or mixing solvent). Further requirements might be prescribed by the intended use or application of the dispersion. Such requirements might include biocompatibility or stability under more extreme environments, such as high temperatures.

The surface of the selected nanoparticles will be chemically or physically modified in some manner. Such modifications to the nanoparticle surface may include, for example, covalent chemical bonding, hydrogen bonding, electrostatic attraction, London forces and hydrophilic or hydrophobic interactions so long as the interaction is maintained at least during the time period required for the nanoparticles to achieve their intended utility. The surface of a nanoparticle may be modified with one or more surface modifying groups. The surface modifying groups may be derived from a myriad of surface modifying agents. Schematically, surface modifying agents may be represented by the following general formula:

A-B (I)

The A group in Formula I is a group or moiety that is capable of attaching to the surface of the nanoparticle. In those situations where the nanoparticle is processed in solvent, the B group is a compatibilizing group with whatever solvent is used to process the nanoparticles. In those situations where the nanoparticles are not processed in solvent, the B group is a group or moiety that is capable of preventing irreversible agglomeration of the nanoparticles. It is possible for the A and B components to be the same, where the attaching group may also be capable of providing the desired surface compatibility. The compatibilizing group may be reactive, but is generally nonreactive, with the microparticles. It is understood that the attaching composition may be comprised of more than one component or created in more than one step, for example, the A composition may be comprised of an A' moiety which is reacted with the surface of a nanoparticle, followed by an A" moiety which can then be reacted with B. The sequence of addition is not important, that is, the A'A"B component reactions can be wholly or partly performed prior to attachment to the nanoparticle. Further description of nanoparticles in coatings can be found in Linsenbuhler, M. et. al., Powder Technology, 158, 2003, p. 3-20.

Many suitable classes of surface-modifying agents for modifying the nanoparticle surface are known to those skilled in the art and include silanes, organic acids, organic bases, and alcohols, and combinations thereof.

In another embodiment, surface-modifying agents include silanes. Examples of silanes include organosilanes such as alkylchlorosilanes; alkoxysilanes (for example, methyltrimethoxysilane, methyltriethoxysilane, ethyltrimethoxysilane, ethyltriethoxysilane, *n*-propyltrimethoxysilane, *n*-propyltriethoxysilane, i-propyltrimethoxysilane, *i*-propyltriethoxysilane, butyltrimethoxysilane, butyltriethoxysilane, hexyltrimethoxysilane, octyltrimethoxysilane, 3-mercaptopropyltrimethoxysilane, *n*-octyltriethoxysilane, isooctyltrimethoxysilane, phenyltriethoxysilane, polytriethoxysilane, vinyltrimethoxysilane, vinyldimethylethoxysilane, vinylmethyldiacetoxysilane, vinylmethyldiethoxysilane, vinyltriacetoxysilane, vinyltriethoxysilane, vinyltriisopropoxysilane, vinyltrimethoxysilane, vinyltriphenoxysilane, vinyltri(*t*-butoxy)silane, vinyltris(isobutoxy)silane, vinyltris(isopropenoxy)silane, and vinyltris(2-methoxyethoxy)silane; trialkoxyarylsilanes; isooctyltrimethoxy-silane; N-(3-triethoxysilylpropyl)methoxyethoxyethoxy ethyl carbamate; N-(3-triethoxysilylpropyl) methoxyethoxyethoxyethyl carbamate; silane functional (meth)acrylates (for example, 3-(methacryloyloxy)propyltrimethoxysilane, 3-acryloyloxypropyltrimethoxysilane, 3-(methacryloyloxy)propyltriethoxysilane, 3-(methacryloyloxy)propylmethyldimethoxysilane, 3-(acryloyloxypropyl)methyldimethoxysilane, 3-(methacryloyloxy)propyldimethylethoxysilane, 3-(methacryloyloxy)methyltriethoxysilane, 3-(methacryloyloxy)methyltrimethoxysilane, 3-(methacryloyloxy)propyldimethylethoxysilane, 3-(methacryloyloxy)propenyltrimethoxysilane, and 3-(methacryloyloxy)propyltrimethoxysilane)); polydialkylsiloxanes (for example, polydimethylsiloxane); arylsilanes (for example, substituted and unsubstituted arylsilanes); alkylsilanes (for example, substituted and unsubstituted alkyl silanes (for example, methoxy and hydroxy substituted alkyl silanes)), and combinations thereof.

In one embodiment, the surface modifying agent for the nanoparticle may be an unsubstituted alkylsilane.

In one embodiment, the surface modifying agent for the nanoparticles is isooctyltrimethoxysilane, where the nanoparticles are isooctyl functionalized silica nanoparticles after chemical modification. "Isooctyl functionalized" refers to the chemical modification of a silica nanoparticle with isooctyltrimethoxysilane as described in U.S. Patent No. 6,586,483 (Kolb et al.).

For example, silica nanoparticles may be modified with silane functional (meth)acrylates as described, for example, in U.S. Patent Nos. 4,491,508 (Olson et al.), 4,455,205 (Olson et al.), 4,478,876 (Chung), 4,486,504 (Chung), and 5,258,225 (Katsamberis). Surface-modified silica nanoparticles include silica nanoparticles surface modified with silane surface modifying agents (for example, acryloyloxypropyl trimethoxysilane, 3-methacryloyloxypropyltrimethoxysilane, 3-mercaptopropyltrimethoxysilane, *n*-octyltrimethoxysilane, isooctyltrimethoxysilane, and combinations thereof). Silica nanoparticles can be treated with a number of surface modifying agents (for example, alcohol, organosilane (for example, alkyltrichlorosilanes, trialkoxyarylsilanes, trialkoxy(alkyl)silanes, and combinations thereof), and organotitanates and mixtures thereof).

Nanoparticle surfaces may be modified with organic acid surface-modifying agents which include oxyacids of carbon (for example, carboxylic acid), sulfur and phosphorus, acid derivatized poly(ethylene) glycols (PEGs) and combinations of any of these. Suitable phosphorus containing acids include phosphonic acids (for example, octylphosphonic acid, laurylphosphonic acid, decylphosphonic acid, dodecylphosphonic acid, and octadecylphosphonic acid), monopolyethylene glycol phosphonate and phosphates (for example, lauryl or stearyl phosphate). Suitable sulfur containing acids include sulfates and sulfonic acids including dodecyl sulfate and lauryl sulfonate. Any such acids may be used in either acid or salt forms.

Non-silane surface modifying agents include acrylic acid, methacrylic acid, beta-carboxyethyl acrylate, mono-2-(methacryloyloxyethyl) succinate, mono(methacryloyloxypolyethyleneglycol) succinate and combinations of one or more of such agents. In another embodiment, surface modifying agents incorporate a carboxylic acid functionality such as CH₃O(CH₂CH₂O)₂CH₂COOH, 2-(2-methoxyethoxy)acetic acid having the chemical structure CH₃OCH₂CH₂OCH₂COOH, mono(polyethylene glycol) succinate in either acid or salt form, octanoic acid, dodecanoic acid, steric acid, acrylic and oleic acid or their acidic derivatives. In a further embodiment, surface modified iron oxide nanoparticles include those modified with endogenous fatty acids (for example, stearic acid) or fatty acid derivatives using endogenous compounds (for example, stearoyl lactylate or sarcosineor taurine derivatives). Further, surface modified zirconia nanoparticles include a combination of oleic acid and acrylic acid adsorbed onto the surface of the particle.

Organic base surface modifying agents for nanoparticles may include alkylamines (for example, octylamine, decylamine, dodecylamine, octadecylamine, and monopolyethylene glycol amines).

Surface-modifying alcohols and thiols may also be employed including aliphatic alcohols (for example, octadecyl, dodecyl, lauryl and furfuryl alcohol), alicyclic alcohols (for example, cyclohexanol), and aromatic alcohols (for example, phenol and benzyl alcohol), and combinations thereof. Thiol-based compounds are especially suitable for modifying cores with gold surfaces.

Surface-modified nanoparticles are generally selected in such a way that dispersions formed with them are free from a degree of particle agglomeration or aggregation that would interfere with the desired properties of the dispersion or application. The surface-modified nanoparticles are generally selected to be either hydrophobic or hydrophilic such that, depending on the character of the microparticles and the fluid polymer component for mixing with the microparticles and nanoparticles, the resulting dispersion exhibits substantially free flowing (that is, the ability of a material to maintain a stable, steady and uniform/consistently flow, as individual particles) properties.

Suitable surface groups constituting the surface modification of the utilized nanoparticles can thus be selected based upon the nature of the fluid polymer components and bulk materials used and the properties desired of the resultant dispersion, article, or application. When a processing solvent (fluid polymer component) is hydrophobic, for example, one skilled in the art can select from among various hydrophobic surface groups to achieve a surface modified particle that is compatible with the hydrophobic solvent; when the processing solvent is hydrophilic, one skilled in the art can select from various hydrophilic surface groups; and, when the solvent is a hydrofluorocarbon or fluorocarbon, one skilled in the art can select from among various compatible surface groups; and so forth. The nature of the microparticles and the other components of the dispersion in addition to the desired final properties can also affect the selection of the nanoparticle surface composition. The nanoparticles can include two or more different surface groups (for example, a combination of hydrophilic and hydrophobic groups) that combine to provide surface modified nanoparticles having a desired set of characteristic. The surface groups will generally be selected to provide a statistically averaged, randomly surface modified particle.

The surface groups on the surface of the nanoparticle may be present in an amount sufficient to provide surface modified nanoparticles with the properties necessary for compatibility and efficient mixing with the microparticles in a fluid polymer component of a dispersion. Further compatibility considerations may include the use of other components for applications in coatings, inks, films, and medicaments.

A variety of methods are available for modifying the surfaces of nanoparticles. A surface modifying agent may, for example, be added to nanoparticles (for example, in the form of a powder or a colloidal dispersion) and the surface modifying agent may be allowed to react with the nanoparticles. Multiple synthetic sequences to bring the nanoparticle together with the surface modifying group are possible. Surface modification processes are described, for example, in U.S. Pat. Nos. 2,801,185 (Iler), 4,522,958 (Das et al.) and 6,586,483 (Kolb et al.).

In one embodiment, the weight ratio of nanoparticles (for example, unmodified and/or surface modified) to microparticles is at least 1:100,000. Generally, the weight ratio of nanoparticles to microparticles is at least 1:100,000 to 1:20, more preferably, the weight ratio ranges from 1:10,000 to 1:500, and more preferably, the weight ratio ranges from 1:5,000 to 1:1,000.

The fluid polymer component of this disclosure may be of a liquid or a melt processable composition. The microparticles and nanoparticles are mixed in the fluid polymer component, where the fluid polymer component may be in the form of a solid, liquid and mixtures thereof. The fluid polymer component may include polymeric resins, oligomeric resins, monomers and combinations thereof, and optionally, water, organic solvents, inorganic solvents and/or plasticizers. The polymeric resins, oligomeric resins, and monomers may be polymerizable.

Examples of useful polymeric resins as fluid components include thermoplastic resins such as polyacrylonitrile, acrylonitrile-butadiene-styrene, styrene-acrylonitrile, cellulose, chlorinated polyether, ethylenevinylacetate, fluorocarbons (for example, polychlorotrifluoroethylene, polytetrafluoroethylene, fluorinated ethylene-propylene and polyvinylidene fluoride), polyamides (for example, polycaprolactam, polyhexamethylene adipamide, polyhexamethylene sebacamide, polyundecanoamide, polylauroamide and polyacrylamide), polyimides (for example, polyetherimide, and polycarbonate), polyolefins (for example, polyethylene, polypropylene, polybutene and poly-4-methyl pentene), polyalkylene terephthalates (for example, polyethylene terephthalate), aliphatic polyesters, polyalkylene oxides (for example, polyphenylene oxide), polystyrene, polyurethane, polyisocyanurates, vinyl polymers (for example, polyvinyl chloride, polyvinyl acetate, polyvinyl alcohol, polyvinyl butyral, polyvinylpyrrolidone, and polyvinylidene chloride), and combinations thereof.

Other useful thermoplastic resins such as elastomers include fluoroelastomers including, for example, polytrifluoroethylene, polyvinylidene fluoride, hexafluoropropylene and fluorinated ethylene-propylene copolymers, fluorosilicones and chloroelastomers including, for example, chlorinated polyethylene, and combinations thereof.

Examples of useful polymeric resins as fluid components include thermosetting resins such as natural and synthetic rubber resins, polyesters, polyurethanes, hybrids and copolymers thereof. Some useful resins include acylated urethanes and acylated polyesters, amino resins (for example, aminoplast resins) including, for example, alkylated urea-formaldehyde resins, melamine-formaldehyde resins, acrylate resins including, for example, acrylates and methacrylates, vinyl acrylates, acrylated epoxies, acrylated urethanes, acrylated polyesters, acrylated acrylics, acrylated polyethers, vinyl ethers, acrylated oils and acrylated silicones, alkyd resins such as urethane alkyd resins, polyester resins, reactive urethane resins, phenolic resins including, for example, resole resins, novolac resins and phenol-formaldehyde resins, phenolic/latex resins, epoxy resins including, for example, bisphenol epoxy resins, aliphatic and cycloaliphatic epoxy resins, epoxy/urethane resin, epoxy/acrylate resin and epoxy/silicone resin, isocyanate resins, isocyanurate resins, polysiloxane resins including alkylalkoxysilane resins, reactive vinyl resins and mixtures therof.

In one embodiment, the fluid polymer component is one of at least polyalkyleneoxides, polyesters, polyamides, polycarbonates, and polyolefins.

The mixing of the nanoparticles and microparticles in a fluid polymer component for making a dispersion may be accomplished via extrusion, melt mixing, solution mixing and combinations thereof. The dispersion has an increased material throughput relative to a comparable dispersion that is free of surface modified nanoparticles.

A variety of equipment and techniques are known in the art for melt processing polymeric dispersions. Such equipment and techniques are disclosed, for example, in U.S. Patent Nos. 3,565,985 (Schrenk et al.), 5,427,842 (Bland et. al.), 5,589,122 and 5,599,602 (Leonard), and 5,660,922 (Henidge et al.). Examples of melt processing equipment include, but are not limited to, extruders (single and twin screw), batch off extruders, Banbury mixers, and Brabender extruders for melt processing the inventive composition.

In one aspect, the dispersion is mixed with an extruder. The heating of the composition is conducted at at least one temperature in a range of 75 °C to 300 °C. The heating may include more than one temperature during mixing of the microparticles and nanoparticles in a fluid polymer component (for example, multiple zone extruder). The components of the dispersion may be mixed and conveyed through an extruder to yield a dispersion having increased material throughput. The processing temperatures are sufficient to form a dispersion, and provide for decrease mixing time.

In one embodiment, the material throughput of the dispersion relative to a comparable dispersion that is free of nanoparticles is increased by at least 10 % as determined by the weight of the composition after mixing as a function of time. Preferably, the material throughput is increased by at least 15 %, at least 20 %, at least 25 %, at least 30 %, at least 35 %, at least 40 %, at least 45 %, or even at least 50 %.

In one embodiment, the material throughput of the dispersion may be increased with the presence of a sufficient amount of nanoparticles relative to a composition that is free of nanoparticles, if under at least one identical condition (for example, screw speed, extrusion temperature, feed rate, screw configuration). Effective mixing of the microparticles and nanoparticles and a fluid polymer component may decrease the mixing time of the dispersion.

The concentration of nanoparticles present in the dispersion is at least 0.00075 weight percent based on the total weight of the dispersion. Generally, the nanoparticles are present in the dispersion at a concentration ranging from at least 0.0075 to 15 weight percent, more preferably at a concentration ranging from 0.075 to 7.5 weight percent, and most preferably at a concentration ranging from 0.75 to 5 weight percent.

In one aspect, the dispersions may be selected for use in coatings and/or coating compositions (for example, paints for indoor and outdoor applications). Examples of paints are described in U.S. Patent Nos. 7,041,727 (Kubicek et al.) and 6,881,782 (Crater et al.). Examples of paint and/or coating compositions comprising dispersion are disclosed in Example 1-4 of the Examples.

Additional applications include inks and paints where the composition comprising the dispersion further comprises a curable component. Examples of curable components include, but are not limited to, dicyandiamides, epoxides, acrylates, alcohols, organic and inorganic peroxides, isocyanates, acids, olefins, urethanes, methacrylates, esters, and combinations thereof. The curable component may be a fluid polymer component or an additional component of a coating or ink composition.

Inks typically comprise an emulsion of a polymer or binder in a solvent with a pigment and/or additives as described in US 7,074,842 (Chung et al.). Dispersions where the fluid polymer component is a polymeric resin, oligomeric resin, and/or polymerizable monomer may be used in ink and/or ink compositions.

### Examples

The present invention is more particularly described in the following examples that are intended as illustrations only, since numerous modifications and variations within the scope of the present invention will be apparent to those skilled in the art. Unless otherwise noted, all parts, percentages, and ratios reported in the following examples are on a weight basis, and all reagents used in the examples were obtained, or are available, from the chemical suppliers described below, or may be synthesized by' conventional techniques.

All parts, percentages, ratios, etc. in the examples are by weight, unless noted otherwise. Solvents and other reagents used were obtained from Sigma-Aldrich Chemical Company, St. Louis, MO, unless otherwise specified. "Epon 2004", an epoxy resin (EW = 4) was supplied by Hexion Specialty Company of Houston, TX. "Dicyandiamid AB04", a dicyandiamide curative was available from Degussa Corporation, Parsippany, NJ. "Vansil W20" (calcium metaslicate), an inorganic filler (microparticles) was available from R.T. Vanderbilt Chemicals, Norwalk, CT. Green Pigment C.I. 74260, a pigment, was supplied by from Sun Chemical Corporation, Parsippany, NJ. "Epi-Cure P103", a catalyst was supplied by Hexion Specialty Chemicals, Houston, TX. SMC 1108, a pigment (TiO₂) was available from Special Materials Company, Doylestown, PA. Resiflow PL 200, a flow control agent was available from Estron Chemical, Incorporated, Calvert City, KY.

### Surface Modified Nanoparticles

Surface modified nanoparticles were prepared by the procedure described in U.S. Patent No. 6,586,483 (Kolb et al.). Nalco 2326 colloidal silica (nanoparticles) was obtained from Nalco Chemical Comp., Naperville, IL. Silica nanoparticles were surface modified with isooctyltrimethoxysilane available from Wacker Silicones Corp., Adrian, MI, and collected as isooctylsilane surface modified silica nanoparticles.

### Bending of Ceramic Bubbles with Nanoparticles (Visual inspection)

Ceramic microspheres were prepared as described in U.S. Publication No. 2006/0122049-A1 (Marshall, H. et al.), and mixed with 1 wt. % surface modified nanoparticles (as described above) to demonstrate enhanced dispersion of nanoparticles within microspheres (referenced as Sample Q). The control sample contained ceramic microspheres without nanoparticles. The microspheres used contained agglomerates. The control sample and Sample Q were mixed in separate containers to note the reduction of agglomerated microspheres originally present. In Sample Q, no visible agglomerates were observed, and a free flowing blend was observed after approximately 1 minute of mixing at a 25 % mixer speed setting. After approximately 2 minutes of mixing at a 50 % mixer speed setting, the control sample retained greater than 50 % of the original agglomerates with intermittent flow. Sample Q demonstrated enhanced flow and mixing of ceramic microspheres with a dispersion of surface modified nanoparticles relative to the control sample free of surface modified nanoparticles.

### Preparation of a Dispersion Comprising Surface Modified Nanoparticles in VANSIL W20 (Microparticles)

A 1 weight percent (wt. %) and a 0.1 wt. % dispersion of surface modified nanoparticles combined with VansilW20 (microparticles) were prepared.

The nanoparticles were first dispersed in toluene at 1 wt. % and 0.1 wt. %, respectively, and then added to microparticles. The dispersion was further diluted with an additional 300 grams of toluene prior to homogenization. The nanoparticles and the microparticles were mixed with a Silverson L4R homogenizer (Chesham, UK) for 30 minutes. The solvent was removed, and the mixture was dried at 150 °C.

### Comparative Example A

Comparative Example A consisted of components including Epon 2004, Dicyandiamid AB 04, Epi-Cure P103, SMC 1108, Green Pigment C.I. 74260, Resiflow PL-200, and Vansil W20 (microparticles) in grams as specified in Table 1 (below). The composition was made using a mixing and an extrusion process. The components were first premixed in a high shear mixer (Thermo Prism model #B21R 9054 STR/2041) at about 4000 revolutions per minute (rpm) for 20 minutes. After premixing, the samples were melt-mixed using a twelve-inch co-rotating twin screw extruder (B&P Processing Systems, model #MP-2019; 15:1 with 17 - 90° kneading blocks and 2 - 60° forward kneading blocks) at a feed rate set point of 1.5. The exit temperature of the composition from the extruder, the extruder screw speed, and the material throughput of the composition after mixing are listed in Table 1 (below). This example was free of a dispersion of nanoparticles and microparticles.

### Examples 1-4

Examples 1 - 4 listed in Table 1 describe compositions comprising dispersions. The microparticles and nanoparticles of these dispersion were prepared as described above prior to premixing with a resin and other components. The components of the compositions described within this section were first premixed in a high shear mixer (Thermo Prism model #B21R 9054 STR/2041) at about 4000 rpm (revolutions per minute) for 20 seconds. The components were then melt-mixed with a twelve-inch co-rotating twin screw extruder (B&P Processing Systems, model #MP-2019; 15:1 with 17 - 90° kneading blocks and 2 - 60° forward kneading blocks) at a feed rate set point of 1.5, where the material throughput was recorded. The exit temperature of the composition from the extruder, the extruder screw speed, and the material throughput of the composition after mixing are listed in Table 1 (below).

**Table 1 (Resin Compositions)**

| | **Comparative Example A (grams)** | **Example 1 (grams)** | **Example 2 (grams)** | **Example 3 (grams)** | **Example 4 (grams)** |
|---|---|---|---|---|---|
| Epoxy Resin | 710.05 | 707.65 | 707.65 | 709.82 | 709.82 |
| [Epon 2004] | | | | | |
| Curative | | | | | |
| [Dicyandiamid AB 04] | 15.19 | 15.14 | 15.14 | 15.19 | 15.19 |
| Surface Modified | | | | | |
| Nanoparticles of dispersion | 0.00 | 2.50 | 2.50 | 0.25 | 0.25 |
| Vansil W20 of dispersion | 0.00 | 250.00 | 250.00 | 250.00 | 250.00 |
| Vansil W20 | 250.00 | 0.00 | 0.00 | 0.00 | 0.00 |
| 2-Methylimidazole | | | | | |
| [Epi-Cure P103] | 8.51 | 8.48 | 8.48 | 8.50 | 8.50 |
| Pigment | | | | | |
| [Green Pigment C.I. 74260] | 0.24 | 0.24 | 0.24 | 0.24 | 0.24 |
| Flow Control Agent | | | | | |
| [Resiflow PL-200] | 10.00 | 10.00 | 10.00 | 10.00 | 10.00 |
| TiO₂ [SMC 1108] | 6.01 | 5.99 | 5.99 | 6.01 | 6.01 |
| | | | | | |
| Extruder Screw Speed | 460 | 460 | 400 | 460 | 400 |
| (rpm) | | | | | |
| Exit Temperature | 112 | 111 | 109 | 112 | 107 |
| (°C) | | | | | |
| Material Throughput | 72 | 99 | 79 | 85 | 76 |
| (grams/minute) | | | | | |

Table 1 (above) shows the results of using the dispersion of this disclosure. In Example 1, the dispersion (1 wt. % surface modified nanoparticles) yielded an approximately 40 percent increase in material throughput relative to Comparative Example A at an extruder screw speed of 460 rpm. Similarly, Example 3, which comprises a dispersion having 0.1 wt. % surface modified nanoparticles, yielded an 18 percent increase in material throughput under analogous processing conditions. Examples 2 and 4 (dispersions comprising 1 wt. % and 0.1 wt. % surface modified nanoparticles, respectively) showed increased material throughput at the same feed rate and a lower screw speed relative to Comparative Example A.

With a higher material throughput, the torque needed to process the compositions of Table 1 would generally be decreased relative the composition of Comparative Example A. A decrease in energy consumption to process the compositions comprising the dispersions of Examples 1-4 would be expected.

## Claims

1. A method of making a dispersion comprising:
mixing microparticles, nanoparticles, and a fluid polymer component to form a dispersion, wherein the concentration of nanoparticles present in the dispersion is at least 0.00075 weight percent, based on the total weight of the dispersion;
wherein the material throughput of the dispersion relative to a comparable dispersion that is free of nanoparticles is increased by at least 10%,
wherein the microparticles have a median particle size diameter greater than 0.5 micrometer, and wherein the nanoparticles have a median diameter less than 100 nanometers.

2. A method according to claim 1, wherein the fluid polymer component is a thermoplastic resin.

3. A method according to claim 2, wherein the thermoplastic resin is selected from polyacrylonitrile, acrylonitrile-butadiene-styrene, styrene-acrylonitrile, cellulose, chlorinated polyether, ethylenevinylacetate, fluorocarbons, polyamides, polyimides, polyolefins, polyalkylene terephthalates, aliphatic polyesters, polyalkylene oxides, polystyrenes, polyurethanes, polyisocyanurates, vinyl polymers, and combinations thereof.

4. A method according to claim 2, wherein the thermoplastic resin comprises at least one elastomer selected from polytrifluoroethylene, polyvinylidene fluoride, hexafluoropropylene, fluorinated ethylene-propylene copolymers, fluorosilicones, chloroelastomers and combinations thereof.

5. A method according to claim 1, wherein the fluid polymer component is a thermosetting resin.

6. A method according to claim 5, wherein the thermosetting resin is selected from natural and synthetic rubber resins, polyesters, polyurethanes, acylated urethanes, acylated polyesters, amino resins including alkylated urea-formaldehyde resins, melamine-formaldehyde resins, acrylate resins including acrylates and methacrylates, vinyl acrylates, acrylated epoxies, acrylated urethanes, acrylated polyesters, acrylated acrylics, acrylated polyethers, vinyl ethers, acrylated oils and acrylated silicones, alkyd resins such as urethane alkyd resins, polyester resins, reactive urethane resins, phenolic resins including resole resins, novolac resins and phenol-formaldehyde resins, phenolic/latex resins, epoxy resins including bisphenol epoxy resins, aliphatic and cycloaliphatic epoxy resins, epoxy/urethane resin, epoxy/acrylate resin and epoxy/silicone resin, isocyanate resins, isocyanurate resins, polysiloxane resins including alkylalkoxysilane resins, reactive vinyl resins, and mixtures thereof.

7. A method according to claim 1, wherein the weight ratio of the nanoparticles to the microparticles is at least 1:100,000.

8. A method according to claim 1, wherein the microparticles are selected from the group consisting of fillers, extenders, ceramic beads, ceramic bubbles, ceramic microspheres, pigments, and combinations thereof.

9. A method according to claim 1, wherein the nanoparticles are selected from the group consisting of silica, titania, alumina, nickel oxide, zirconia, vanadia, ceria, iron oxide, antimony oxide, tin oxide, zinc oxide, calcium phosphate, calcium hydroxyapatite, and combinations thereof.

10. A method according to claim 1, wherein the nanoparticles are surface-modified.

## Patentansprüche

1. Verfahren zur Herstellung einer Dispersion, bei dem man:
Mikropartikel, Nanopartikel und eine fluide Polymerkomponente zur Bildung einer Dispersion mischt, wobei die Konzentration von Nanopartikeln in der Dispersion mindestens 0,00075 Gewichtsprozent, bezogen auf das Gesamtgewicht der Dispersion, beträgt;
wobei der Stoffdurchsatz der Dispersion in Relation zu einer vergleichbaren Dispersion, die frei von Nanopartikeln ist, um mindestens 10% erhöht ist,
wobei die Mikropartikel einen mittleren Teilchengrößendurchmesser von mehr als 0,5 Mikrometer aufweisen und die Nanopartikel einen mittleren Durchmesser von weniger als 100 Nanometer aufweisen.

2. Verfahren nach Anspruch 1, bei dem es sich bei der fluiden Polymerkomponente um ein thermoplastisches Harz handelt.

3. Verfahren nach Anspruch 2, bei dem das thermoplastische Harz aus Polyacrylnitril, Acrylnitril-Butadien-Styrol, Styrol-Acrylnitril, Cellulose, chloriertem Polyether, Ethylen-Vinylacetat, Fluorkohlenstoffen, Polyamiden, Polyimiden, Polyolefinen, Polyalkylenterephtalaten, aliphatischen Polyestern, Polyalkylenoxiden, Polystyrolen, Polyurethanen, Polyisocyanuraten, Vinylpolymeren und Kombinationen davon ausgewählt wird.

4. Verfahren nach Anspruch 2, bei dem das thermoplastische Harz mindestens ein Elastomer, das aus Polytrifluorethylen, Polyvinylidenfluorid, Hexafluorpropylen, fluorierten Ethylen-Propylen-Copolymeren, Fluorsilikonen, Chlorelastomeren und Kombinationen davon ausgewählt ist, umfasst.

5. Verfahren nach Anspruch 1, bei dem es sich bei der fluiden Polymerkomponente um ein wärmehärtendes Harz handelt.

6. Verfahren nach Anspruch 5, bei dem das wärmehärtende Harz aus Natur- und Synthesekautschukharzen, Polyestern, Polyurethanen, acylierten Polyurethanen, acylierten Polyestern, Aminoharzen einschließlich alkylierten Harnstoff-Formaldehyd-Harzen, Melamin-FormaldehydHarzen, Acrylatharzen einschließlich Acrylaten und Methacrylaten, Vinylacrylaten, acrylierten Epoxidharzen, acrylierten Urethanen, acrylierten Polyestern, acrylierten Acrylharzen, acrylierten Polyethern, Vinylethern, acrylierten Ölen und acrylierten Silikonen, Alkydharzen wie UrethanAlkydharzen, Polyesterharzen, reaktiven Urethanharzen, Phenolharzen einschließlich Resolharzen, Novolakharzen und Phenol-FormaldehydHarzen, Phenol/Latex-Harzen, Epoxidharzen einschließlich Bisphenol-Epoxidharzen, aliphatischen und cycloaliphatischen Epoxidharzen, Epoxy/Urethan-Harz, Epoxy/Acrylat-Harz und Epoxy/Silikon-Harz, Isocyanatharzen, Isocyanuratharzen, Polysiloxanharzen einschließlich Alkylalkoxysilanharzen, reaktiven Vinylharzen und Mischungen davon ausgewählt wird.

7. Verfahren nach Anspruch 1, wobei das Gewichtsverhältnis von Nanopartikeln zu Mikropartikeln mindestens 1:100.000 beträgt.

8. Verfahren nach Anspruch 1, bei dem die Mikropartikel aus der Gruppe bestehend aus Füllstoffen, Streckmitteln, Keramikperlen, Keramikhohlkugeln, Keramikmikrokugeln, Pigmenten und Kombinationen davon ausgewählt werden.

9. Verfahren nach Anspruch 1, bei dem die Nanopartikel aus der Gruppe bestehend aus Siliciumdioxid, Titandioxid, Aluminiumoxid, Nickeloxid, Zirconiumdioxid, Vanadiumoxid, Ceroxid, Eisenoxid, Antimonoxid, Zinnoxid, Zinkoxid, Calciumphosphat, Calciumhydroxyapatit und Kombinationen davon ausgewählt werden.

10. Verfahren nach Anspruch 1, wobei die Nanopartikel oberflächenmodifiziert sind.

## Revendications

1. Procédé de fabrication d'une dispersion, comprenant :
le mélange de microparticules, de nanoparticules, et d'un polymère fluide constitutif pour former une dispersion, dans lequel la concentration des nanoparticules présentes dans la dispersion est d'au moins 0,00075 % en poids, relativement au poids total de la dispersion ;
dans lequel le débit du matériau formé de la dispersion relativement à une dispersion comparable exempte de nanoparticules est augmenté d'au moins 10 %,
dans lequel les microparticules ont un diamètre granulométrique médian supérieur à 0,5 micromètre, et dans lequel les nanoparticules ont un diamètre médian inférieur à 100 nanomètres.

2. Procédé selon la revendication 1, dans lequel le polymère fluide constitutif est une résine thermoplastique.

3. Procédé selon la revendication 2, dans lequel la résine thermoplastique est sélectionnée parmi le polyacrylonitrile, l'acrylonitrile-butadiène-styrène, le styrène-acrylonitrile, la cellulose, le polyéther chloré, l'éthylène-acétate de vinyle, les fluorocarbures, les polyamides, les polyimides, les polyoléfines, les téréphtalates de polyalkylène, les polyesters aliphatiques, les oxydes de polyalkylène, les polystyrènes, les polyuréthanes, les polyisocyanurates, les polymères vinyliques, et des combinaisons de ceux-ci.

4. Procédé selon la revendication 2, dans lequel la résine thermoplastique comprend au moins un élastomère sélectionné parmi le polytrifluoroéthylène, le fluorure de polyvinylidène, l'hexafluoropropylène, les copolymères fluorés d'éthylène-propylène, les fluorosilicones, les chloroélastomères, et des combinaisons de ceux-ci.

5. Procédé selon la revendication 1, dans lequel le polymère fluide constitutif est une résine thermodurcissable.

6. Procédé selon la revendication 5, dans lequel la résine thermodurcissable est sélectionnée parmi les résines de caoutchouc naturel et synthétique, les polyesters, les polyuréthanes, les uréthanes acylés, les polyesters acylés, les résines amino comprenant les résines urée-formaldéhyde alkylées, les résines mélamine-formaldéhyde, les résines acrylates comprenant les acrylates et les méthacrylates, les acrylates de vinyle, les époxydes acrylés, les uréthanes acrylés, les polyesters acrylés, les composés acryliques acrylés, les polyéthers acrylés, les éthers vinyliques, les huiles acrylées et les silicones acrylées, les résines alkydes telles que les résines alkydes uréthaniques, les résines de polyester, les résines uréthaniques réactives, les résines phénoliques comprenant les résines résols, les résines novolaques et les résines phénol-formaldéhyde, les résines phénoliques-latex, les résines époxydes comprenant les résines époxydes de bisphénol, les résines époxydes aliphatiques et cycloaliphatiques, les résines époxy-uréthaniques, les résines époxy-acrylates et les résines époxy-silicones, les résines d'isocyanates, les résines d'isocyanurates, les résines de polysiloxanes comprenant les résines d'alkylalcoxysilanes, les résines vinyliques réactives, et des mélanges de ceux-ci.

7. Procédé selon la revendication 1, dans lequel le rapport pondéral des nanoparticules contre les microparticules est d'au moins 1:100 000.

8. Procédé selon la revendication 1, dans lequel les microparticules sont sélectionnées dans le groupe constitué des charges, des diluants, des billes de céramique, des sphères creuses en céramique, des microsphères de céramique, des pigments, et de combinaisons de ceux-ci.

9. Procédé selon la revendication 1, dans lequel les nanoparticules sont sélectionnées dans le groupe constitué de la silice, du dioxyde de titane, de l'alumine, de l'oxyde de nickel, de la zircone, de l'oxyde de vanadium, de l'oxyde cérique, de l'oxyde de fer, de l'oxyde d'antimoine, de l'oxyde d'étain, de l'oxyde de zinc, du phosphate de calcium, de l'hydroxyapatite de calcium, et de combinaisons de ceux-ci.

10. Procédé selon la revendication 1, dans lequel les nanoparticules sont modifiées en surface.
